# EUROPEAN PATENT SPECIFICATION

(11) **EP 3 175 950 B1**
(45) Date of publication and mention of the grant of the patent: **06.03.2019**
(21) Application number: 16197440.7
(22) Date of filing: 04.11.2016
(51) Int. Cl.: B23Q 7/00, B21D 43/28, B23Q 7/04, B65C 3/02

(54) **MACHINE TO PROCESS BARS MADE OF ALUMINIUM, LIGHT ALLOYS, PVC OR THE LIKE**
MASCHINE ZUR VERARBEITUNG STANGEN AUS ALUMINIUM, LEICHTLEGIERUNGEN, PVC ODER DERGLEICHEN
MACHINE POUR TRAITER DES BARRES EN ALUMINIUM, ALLIAGES LÉGERS, PVC OU SIMILAIRE

(30) Priority: 06.11.2015 IT UB20155112
(43) Date of publication of application: 07.06.2017
(73) Proprietor: F.O.M. Industrie S.r.l., 47841 Cattolica (IT)
(72) Inventor: LATTANZI, Lorenzo, 61121 Pesaro (IT)
(74) Representative: Manconi, Stefano

(56) References cited:
- EP-A1- 2 868 450
- EP-A2- 2 660 023
- FR-A1- 2 770 433
- FR-A1- 2 969 947

## Description

The present invention relates to a machine to process bars made of aluminium, light alloys, PVC or the like.

In the field of processing bars made of aluminium, light alloys, PVC or the like, it is known to provide a machine comprising an elongated base extending in a given first direction; a first roller support device having a plurality of lower rollers mounted to define a lower support surface for at least one bar and so as to rotate around respective first horizontal rotation axes parallel to each other; and a second roller support device having a plurality of side rollers mounted so as to define a lateral support surface for the bar and so as to rotate around respective second vertical rotation axes parallel to each other.

The machine further comprises at least one processing station arranged along the base to process and/or cut the bar; and a feeding device to move the bar along the base, and through the processing station in the first direction.

The machine also has a loading station to load the bars to be processed onto the feeding device; and an unloading station to remove the bars that have just been processed from the feeding device.

Generally, the feeding device comprises a horizontal slide coupled in a sliding manner to a longitudinal guide member of the base, and an elongated clamp, which extends in the first direction, is coupled to the horizontal slide to move in a second and in a third direction orthogonal to each other and to the first direction, is rotatably coupled to the horizontal slide to rotate around a rotation axis parallel to the first direction, and supports, at its free end, a pair of jaws movable between a clamping position and a release position of at least one bar.

The machine further comprises a labelling assembly to apply at least one label on each bar.

Generally, the labelling assembly is attached to the base downstream or upstream of the aforementioned processing station.

In the first case, the label is applied to the bar just machined and, therefore, dirty with dust and/or processing chips and/or lubricating oil and is, therefore, subject to the risk of detachment.

In both cases, the application of the label involves stopping the feeding device and, therefore, relatively reduced productivity.

The object of the present invention is to provide a machine to process bars made of aluminium, light alloys, PVC or the like which is free of the drawbacks described above and which is simple and inexpensive to implement.

According to the present invention, there is provided a machine to process bars made of aluminium, light alloys, PVC or the like as claimed in the appended claims.

The present invention will now be described with reference to the accompanying drawings, which illustrate a non-limiting embodiment thereof, in which:
Figure 1 is a schematic perspective view, with parts removed for clarity, of a preferred embodiment of the machine to process bars made of aluminium, light alloys, PVC or the like according to the present invention;
Figures 2 and 3 show two schematic views in perspective, with parts removed for clarity, of a detail of the machine in figure 1; and
Figure 4 is a schematic side view, with parts removed for clarity, of a detail of figures 2 and 3.

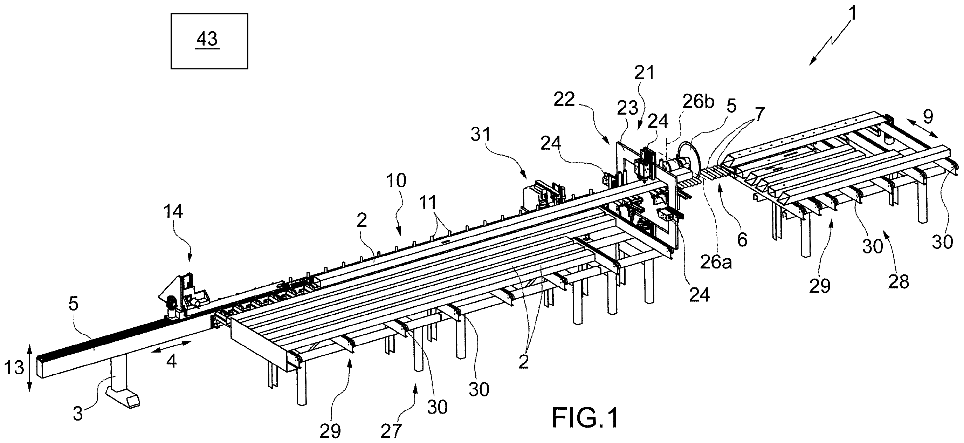

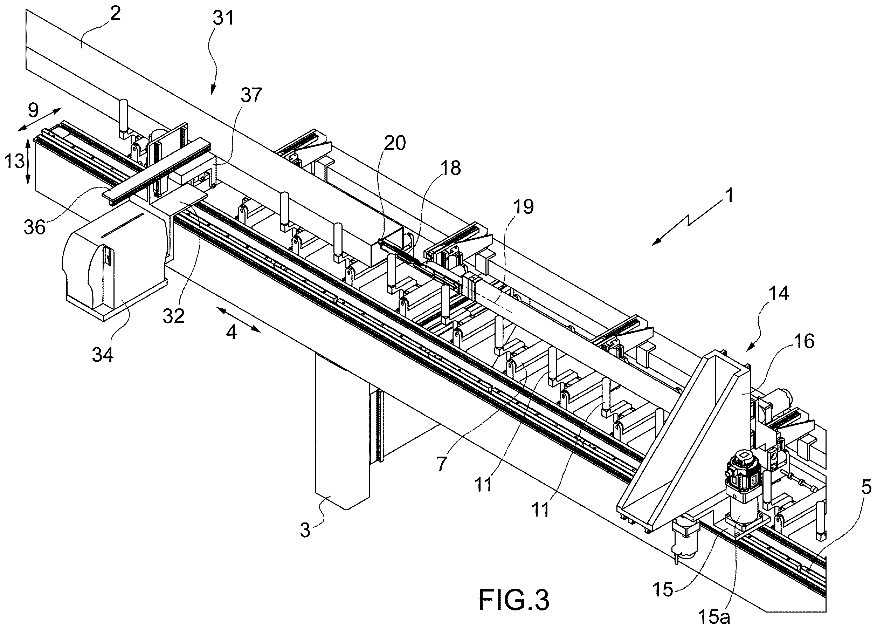

With reference to Figures 1, 2, and 3, reference numeral 1 globally denotes a machine to process bars 2 made of aluminium, light alloys, PVC or the like, which have an elongated shape and a cross section at least partially hollow.

The machine 1 comprises an elongated base 3, which extends in a horizontal direction 4, is of a portal shape, and is provided with a longitudinal guide member 5 parallel to direction 4.

The machine 1 further comprises a first roller support device 6 having a plurality of lower rollers 7 mounted so as to rotate around respective rotation axes 8 substantially parallel to each other and to a horizontal direction 9 transversal to the direction 4. The rollers 7 define a lower support surface P1 for at least one bar 2.

The machine 1 further has a second roller support device 10 comprising a plurality of side rollers 11 mounted so as to rotate around respective rotation axes 12 substantially parallel to each other and to a vertical direction 13 perpendicular to the directions 4 and 9. The rollers 11 define a lateral support surface P2 for at least one bar 2.

Each roller 11 of at least part of the rollers 11 is movable between an operating position, in which the roller 11 projects above the surface P1, and a rest position, in which the roller 11 extends entirely under the surface P1.

The machine 1 further comprises a feeding device 14 to move the bar 2 along the surface P1 in the direction 4.

The device 14 comprises a first horizontal slide 15 coupled in a sliding manner to the member 5 to perform, under the thrust of an operating device 15a of the known type, rectilinear movements along the member 5 in the direction 4; a second horizontal slide 16 coupled in a sliding manner to the horizontal slide 15 to perform, with respect to the horizontal slide 15, rectilinear movements in the direction 9; and a vertical slide 17 coupled in a sliding manner to the horizontal slide 16 to perform, with respect to the horizontal slide 16, rectilinear movements in the direction 13.

The vertical slide 17 supports a gripping member 18, which is coupled in a rotary manner to the vertical slide 17 to rotate, with respect to the vertical slide 17, around a rotation axis 19 parallel to the direction 4, and has two jaws 20 movable between a clamping position and a release position of the bar 2.

The machine 1 further has a processing station 21, which is arranged along the base 3, and is provided with an operating unit 22 to perform the processing of the bars 2.

The unit 22 comprises an annular frame 23, which extends around the roller support devices 6, 10, supports a plurality of operating heads 24 movable in the directions 9 and/or 13, and also supports a cutting blade 25 moving in the directions 4 and/or 9 and/or 13 and/or around a rotation axis 26a parallel to the direction 9 and/or around a rotation axis 26b parallel to the direction 13.

The machine 1 is also provided with a loading station 27 to load the bars 2 to be processed onto the feeding device 14 and an unloading station 28 to remove the bars 2 that have just been processed from the feeding device 14.

Each station 27, 28 comprises a belt conveyor 29, which faces the roller support device 6 in the direction 9, and comprises, in turn, a plurality of conveyor belts 30 parallel to each other and to the direction 9.

The bars 2 are labelled by a labelling assembly 31 mounted along the base 3 upstream of the processing station 21 in the feed direction 4 of the bars 2 from the station 27 to the station 28.

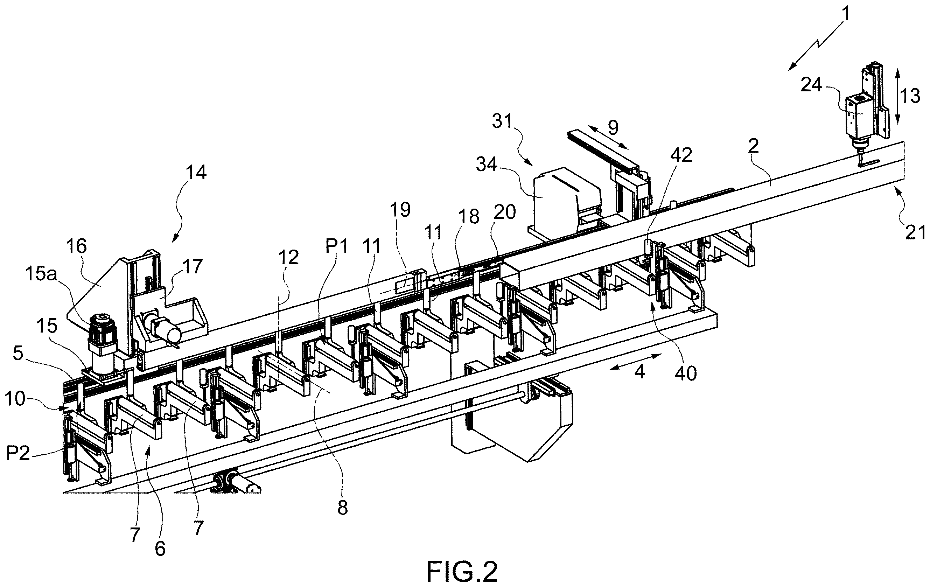

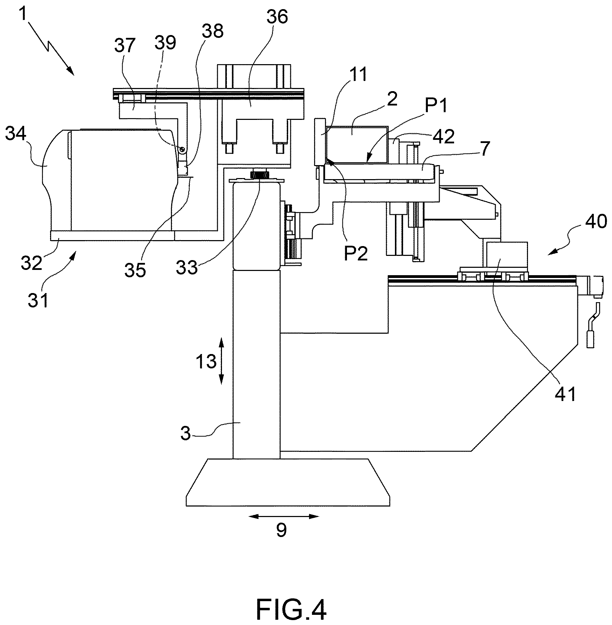

As shown in figures 2, 3, and 4, the assembly 31 comprises a first horizontal slide 32, which is coupled in a sliding manner to the member 5 to move in the direction 4 under the thrust of an operating device 33 independent of the operating device 15a of the slide 15, and supports a label store 34 for the storage and printing of the labels 35.

The assembly 31 further has a vertical slide 36, which extends in the direction 9, and is connected in a sliding manner to the horizontal slide 32 to perform rectilinear movements in the direction 13.

The assembly 31 has, lastly, a second horizontal slide 37, which is L-shaped and is coupled in a sliding manner to the vertical slide 36 to perform rectilinear movements in the direction 9.

The horizontal slide 37 supports a suction gripping member 38, which is connected with a pneumatic suction device, and is hinged to the horizontal slide 37 to rotate, with respect to the horizontal slide 37, around a pivoting axis 39 parallel to the direction 4 between a first operating position, in which the member 38 positions itself parallel to the surface P1, and a second operating position, in which the member 38 places itself parallel to the surface P2.

According to a variant not shown, the member 38 places itself at an angle comprised between 0° and 90° with respect to the surface P1.

In use, each bar 2 is moved by the belt conveyor 29 of the station 27 onto the rollers 7 of the device 6, and is moved in contact with the rollers 11 of the device 10 by an aligner device 40.

The device 40 comprises a slide 41 movable in the direction 9 from and towards the rollers 11 and at least one aligner roller 42, which extends between two belts 30 of the conveyor 29 of the station 27, and is movable between an operating position, in which the roller 42 projects above the surface P1, and a rest position, in which the roller 42 is placed entirely underneath said surface P1.

Once placed on the surface P1 of the rollers 7 and against the surface P2 of the rollers 11, the bar 2 is grasped by the gripping member 18 of the feeding device 14 and moved forward through the processing station 21 in the direction 4.

The device 15a for operating the slide 15 and the device 33 for operating the slide 32 are selectively controlled by an electronic control unit 43 configured to move the operating device 14 and the labelling assembly 31 in the direction 4 with respective laws of motion substantially identical to each other and to apply at least one label 35 to each bar 2 at the same time as the bar 2 moves along the base 3, in particular through the processing station 21.

The movement of the suction gripping member 38 into one of its two operating positions allows application of the label 35 on an upper face or a side face of the bar 2.

According to a variant not shown, the base 3 has two longitudinal guide members engaged in a sliding manner one by the horizontal slide 15 of the device 14 and the other by the horizontal slide 32 of the assembly 31.

According to a further variant not shown, the labelling assembly 31 is mounted along the base 3 downstream of the frame 23 in the feed direction 4 of the bars 2 from the station 27 to the station 28, in particular upstream or downstream of the blade 25.

## Claims

1. A machine to process bars (2) made of aluminium, light alloys, PVC or the like, said machine comprising an elongated base (3) extending in a first direction (4); a lower support surface (P1) for at least one bar (2); at least one processing station (21) to process and/or cut the bar (2); a feeding device (14) to feed the bar (2) along the base (3) and through the processing station (21) in the first direction (4); a first operating device (15a) to move the feeding device (14) in the first direction (4); and a labelling assembly (31) to apply at least one label (35) on each bar (2); and **characterized in that** it comprises, furthermore, a second operating device (33), independent of the first operating device (15a), to move the labelling assembly (31) along the base (3) in the first direction (4) .

2. A machine according to claim 1 and comprising, furthermore, an electronic control unit (43), which is configured to selectively control said first and second operating devices (15a, 33) so as to move the feeding device (14) and the labelling assembly (31) along the base (3) in the first direction (4) with respective laws of motion that are substantially identical to one another.

3. A machine according to claim 1 or 2 and comprising, furthermore, a first roller support device (6), which comprises, in turn, a plurality of first rollers (7) mounted so as to rotate around respective first rotation axes (8) that are parallel to one another and transverse to the first direction (4), and defines said lower support surface (P1).

4. A machine according to any of the previous claims and comprising, furthermore, a second roller support device (10), which comprises, in turn, a plurality of second rollers (11) mounted so as to rotate around respective second rotation axes (12) that are parallel to one another and perpendicular to said lower support surface (P1), and defines a lateral support surface (P2) for at least one bar (2) .

5. A machine according to claim 4, wherein each second roller (11) of at least part of the second rollers (11) is movable between an operating position, in which the second roller (11) projects above the lower support surface (P1), and a rest position, in which the second roller (11) extends under the lower support surface (P1).

6. A machine according to any of the previous claims and comprising, furthermore, a longitudinal guide member (5), which extends in the first direction (4) and is engaged in a sliding manner by the feeding device (14) and by the labelling assembly (31).

7. A machine according to any of the claims from 1 to 5 and comprising, furthermore, two longitudinal guide members, which extend in the first direction (4) and are engaged in a sliding manner one by the feeding device (14) and the other one by the labelling assembly (31).

8. A machine according to any of the previous claims, wherein the labelling assembly (31) comprises a label store (34) and an applying device (36, 37, 38) to transfer the labels (35) from the label store (34) to the bar (2).

9. A machine according to claim 8, wherein the labelling assembly (31) comprises, furthermore, a first horizontal slide (32), which is movable along the base (3) in the first direction (4) and supports the label store (34) and the applying device (36, 37, 38).

10. A machine according to claim 9, wherein the applying device (36, 37, 38) comprises an applying member (38) provided with pick-up means for the label (35); a second horizontal slide (37) to move the applying member (38) in a second direction (9) that is transverse to the first direction (4) and parallel to the lower support surface (P1); and a vertical slide (36) to move the applying member (38) in a third direction (13) that is orthogonal to said first and second directions (4, 9) and to the lower support surface (P1).

11. A machine according to claim 10, wherein the applying member (38) is mounted so as to rotate between at least two operating positions, which are staggered with respect to each other according to an angle ranging from 0° to 90°.

12. A machine according to any of the previous claims and comprising, furthermore, a loading station (27) to load the bars (2) to be processed onto the feeding device (14) and an unloading station (28) to remove the bars (2) that have just been processed from the feeding device (14); the labelling assembly (31) being mounted so as to move between the processing station (21) and at least one of said loading and unloading station (27, 28).

## Patentansprüche

1. Maschine zum Bearbeiten von Stangen (2) aus Aluminium, Leichtlegierungen, PVC oder dergleichen, wobei die Maschine umfasst: eine längliche Basis (3), die sich in einer ersten Richtung (4) erstreckt; eine untere Stütz- bzw. Trägerfläche bzw. -oberfläche (P1) für zumindest eine Stange (2); zumindest eine Bearbeitungsstation (21) zum Bearbeiten und/oder Schneiden der Stange (2); eine Vorschubvorrichtung (14) zum Vorschieben der Stange (2) entlang der Basis (3) und durch die Bearbeitungsstation (21) in der ersten Richtung (4); eine erste Betätigungsvorrichtung (15a) zum Bewegen der Vorschubvorrichtung (14) in der ersten Richtung (4); und eine Etikettieranordnung (31) zum Aufbringen zumindest eines Etiketts (35) auf jede Stange (2); und **dadurch gekennzeichnet, dass** sie ferner eine zweite Betätigungsvorrichtung (33) unabhängig von der ersten Betätigungsvorrichtung (15a) zum Bewegen der Etikettieranordnung (31) entlang der Basis (3) in der ersten Richtung (4) umfasst.

2. Maschine nach Anspruch 1 und ferner umfassend eine elektronische Steuer- bzw. Regeleinheit (43), die konfiguriert ist, die erste und die zweite Betätigungsvorrichtung (15a, 33) selektiv zu steuern bzw. zu regeln, um die Vorschubvorrichtung (14) und die Etikettieranordnung (31) entlang der Basis (3) in der ersten Richtung (4) mit jeweiligen Bewegungsgesetzen zu bewegen, die im Wesentlichen identisch zueinander sind.

3. Maschine nach Anspruch 1 oder 2 und ferner umfassend eine erste Rollenstütz- bzw. -trägervorrichtung (6), die wiederum eine Mehrzahl von ersten Rollen (7) umfasst, die so montiert sind, dass sie sich um jeweilige erste Drehachsen (8) drehen, die parallel zueinander und quer zu der ersten Richtung (4) sind, und die untere Stützfläche (P1) definiert.

4. Maschine nach einem der vorhergehenden Ansprüche und ferner umfassend eine zweite Rollenstütz- bzw. -trägervorrichtung (10), die wiederum eine Mehrzahl von zweiten Rollen (11) umfasst, die so montiert sind, dass sie sich um jeweilige zweite Drehachsen (12) drehen, die parallel zueinander und senkrecht zu der unteren Stützfläche (P1) sind, und eine laterale Stütz- bzw. Trägerfläche bzw. -oberfläche (P2) für zumindest eine Stange (2) definiert.

5. Maschine nach Anspruch 4, wobei jede zweite Rolle (11) zumindest eines Teils der zweiten Rollen (11) zwischen einer Betriebsposition, in der die zweite Rolle (11) über die untere Stützfläche (P1) vorsteht, und einer Ruhestellung bewegbar ist, in der sich die zweite Rolle (11) unter der unteren Stützfläche (P1) erstreckt.

6. Maschine nach einem der vorhergehenden Ansprüche und ferner umfassend ein Längsführungsglied (5), das sich in der ersten Richtung (4) erstreckt und von der Vorschubvorrichtung (14) und der Etikettiervorrichtung (31) gleitend in Eingriff genommen ist.

7. Maschine nach einem der Ansprüche 1 bis 5 und ferner umfassend zwei Längsführungsglieder, die sich in der ersten Richtung (4) erstrecken und von denen eines von der Vorschubvorrichtung (14) und das andere von der Etikettiervorrichtung (31) gleitend in Eingriff genommen ist.

8. Maschine nach einem der vorhergehenden Ansprüche, wobei die Etikettieranordnung (31) einen Etikettenspeicher (34) und eine Aufbringvorrichtung (36, 37, 38) zum Übertragen der Etiketten (35) von dem Etikettenspeicher (34) auf die Stange (2) umfasst.

9. Maschine nach Anspruch 8, wobei die Etikettieranordnung (31) ferner einen ersten horizontalen Schlitten (32) umfasst, der entlang der Basis (3) in der ersten Richtung (4) bewegbar ist und den Etikettenspeicher (34) und die Aufbringvorrichtung (36, 37, 38) stützt bzw. trägt.

10. Maschine nach Anspruch 9, wobei die Aufbringvorrichtung (36, 37, 38) ein Aufbringglied (38), das mit Aufnahmemitteln für das Etikett (35) versehen ist; einen zweiten horizontalen Schlitten (37), um das Aufbringglied (38) in einer zweiten Richtung (9) zu bewegen, die quer zu der ersten Richtung (4) und parallel zu der unteren Stützfläche (P1) ist; und einen vertikalen Schlitten (36) umfasst, um das Aufbringglied (38) in einer dritten Richtung (13) zu bewegen, die orthogonal zu der ersten und der zweiten Richtung (4, 9) und zu der unteren Stützfläche (P1) ist.

11. Maschine nach Anspruch 10, wobei das Aufbringglied (38) so montiert ist, dass es sich zwischen zumindest zwei Arbeitspositionen dreht, die gemäß einem Winkel im Bereich von 0° bis 90° zueinander versetzt sind.

12. Maschine nach einem der vorhergehenden Ansprüche und ferner umfassend eine Ladestation (27) zum Laden der zu bearbeitenden Stangen (2) auf die Vorschubvorrichtung (14) und eine Entladestation (28) zum Entfernen der Stangen (2), die gerade bearbeitet wurden, aus der Vorschubvorrichtung (14); wobei die Etikettieranordnung (31) so montiert ist, dass sie sich zwischen der Bearbeitungsstation (21) und zumindest einer der Lade- und Entladestationen (27, 28) bewegt.

## Revendications

1. Machine pour traiter des barres (2) réalisées en aluminium, en des alliages légers, PVC ou similaires, ladite machine comprenant une base allongée (3) s'étendant dans une première direction (4) ; une surface de support inférieure (P1) pour au moins une barre (2), au moins une station de traitement (21) pour traiter et/ou couper la barre (2) ; un dispositif d'amenée (14) pour amener la barre (2) le long de la base (3) et à travers la station de traitement (21) dans la première direction (4) ; un premier dispositif de fonctionnement (15a) pour déplacer le dispositif d'amenée (14) dans la première direction (4) ; et un ensemble d'étiquetage (31) pour appliquer au moins une étiquette (35) sur chaque barre (2) ; et **caractérisée en ce qu'**elle comprend en outre un deuxième dispositif de fonctionnement (33), indépendant du premier dispositif de fonctionnement (15a), pour déplacer l'ensemble d'étiquetage (31) le long de la base (3) dans la première direction (4).

2. Machine selon la revendication 1 et comprenant en outre une unité de commande électronique (43), qui est configurée pour commander sélectivement lesdits premier et deuxième dispositifs de fonctionnement (15a, 33) de façon à déplacer le dispositif d'amenée (14) et l'ensemble d'étiquetage (31) le long de la base (3) dans la première direction (4) avec des lois de mouvement respectives qui sont sensiblement identiques les unes aux autres.

3. Machine selon la revendication 1 ou 2 et comprenant en outre un premier dispositif de support à rouleaux (6), qui comprend à son tour une pluralité de premiers rouleaux (7) montés de façon à tourner autour de premiers axes de rotation (8) respectifs qui sont parallèles les uns aux autres et transversaux à la première direction (4), et définit ladite surface de support inférieure (P1).

4. Machine selon l'une quelconque des revendications précédentes et comprenant en outre un deuxième dispositif de support à rouleaux (10), qui comprend à son tour une pluralité de deuxièmes rouleaux (11) montés de façon à tourner autour de deuxièmes axes de rotation (12) respectifs qui sont parallèles les uns aux autres et perpendiculaires à ladite surface de support inférieure (P1), et définit une surface de support latérale (P2) pour au moins une barre (2).

5. Machine selon la revendication 4, dans laquelle chaque deuxième rouleau (11) d'au moins une partie des deuxièmes rouleaux (11) est mobile entre une position de fonctionnement, dans laquelle le deuxième rouleau (11) dépasse au-dessus de la surface de support inférieure (P1), et une position de repos, dans laquelle le deuxième rouleau (11) s'étend sous la surface de support inférieure (P1).

6. Machine selon l'une quelconque des revendications précédentes et comprenant en outre un organe de guidage longitudinal (5), qui s'étend dans la première direction (4) et est enclenché de manière coulissante par le dispositif d'amenée (14) et par l'ensemble d'étiquetage (31).

7. Machine selon l'une quelconque des revendications 1 à 5 et comprenant en outre deux organes de guidage longitudinaux, qui s'étendent dans la première direction (4) et sont enclenchés de manière coulissante l'un par le dispositif d'amenée (14) et l'autre par l'ensemble d'étiquetage (31).

8. Machine selon l'une quelconque des revendications précédentes, dans laquelle l'ensemble d'étiquetage (31) comprend un magasin d'étiquettes (34) et un dispositif d'application (36, 37, 38) pour transférer les étiquettes (35) depuis le magasin d'étiquettes (34) à la barre (2).

9. Machine selon la revendication 8, dans laquelle l'ensemble d'étiquetage (31) comprend en outre un premier coulisseau horizontal (32), qui est mobile le long de la base (3) dans la première direction (4) et supporte le magasin d'étiquettes (34) et le dispositif d'application (36, 37, 38).

10. Machine selon la revendication 9, dans laquelle le dispositif d'application (36, 37, 38) comprend un organe d'application (38) pourvu d'un moyen de ramassage pour l'étiquette (35) ; un deuxième coulisseau horizontal (37) pour déplacer l'organe d'application (38) dans une deuxième direction (9) qui est transversale à la première direction (4) et parallèle à la surface de support inférieure (P1) ; et un coulisseau vertical (36) pour déplacer l'organe d'application (38) dans une troisième direction (13) qui est orthogonale auxdites première et deuxième directions (4, 9) et à la surface de support inférieure (P1).

11. Machine selon la revendication 10, dans laquelle l'organe d'application (38) est monté de façon à tourner autour d'au moins deux positions de fonctionnement, qui sont en quinconce l'une par rapport à l'autre selon un angle allant de 0° à 90°.

12. Machine selon l'une quelconque des revendications précédentes et comprenant en outre une station de chargement (27) pour charger les barres (2) à traiter sur le dispositif d'amenée (14) et une station de déchargement (28) pour enlever les barres (2) qui viennent d'être traitées du dispositif d'amenée (14) ; l'ensemble d'étiquetage (31) étant monté de façon à se déplacer entre la station de traitement (21) et au moins l'une desdites stations de chargement et de déchargement (27, 28).
